# EUROPEAN PATENT APPLICATION

(11) **EP 4 779 139 A2**
(43) Date of publication of application: **22.07.2026**
(21) Application number: 26152724.6
(22) Date of filing: 19.01.2026
(51) Int. Cl.: F02C 7/32

(54) **GAS TURBINE ENGINE WITH STARTING SYSTEM AND METHOD FOR USING THE SAME**

(30) Priority: 17.01.2025 US 202519028956
(71) Applicant: RTX Corporation, Farmington, CT 06032 (US)
(72) Inventor: PRUDEN, Jeffrey M., South Windsor 06074 (US); CHRISTIANS, Joseph T., Vernon 06066 (US); SAMMANN, Bradley C., East Hampton 06424 (US); REDFORD, Timothy, (01BE5) Longueuil J4G 1A1 (CA); TEICHMAN, Henry, (01BE5) Longueuil J4G 1A1 (CA)
(74) Representative: Dehns

(57) **Abstract**

A gas turbine engine (20) is provided that includes compressor, combustor, and turbine sections, an engine shaft (30; 32), an accessory gearbox (62), and first and second starters (74; 74A, 74B). The engine shaft (30; 32) is in communication with the compressor section and the turbine section. The accessory gearbox (62) has first and second accessory mounting pads (72; 72A, 72B), and is in communication with the engine shaft (30; 32). The first starter (74; 74A) is mounted on the first accessory mounting pad (72; 72A), and the second starter (74; 74A) is mounted on the second accessory mounting pad (72; 72B). The first starter (74; 74A) is configured to selectively provide rotational drive to the accessory gearbox (62) and the accessory gearbox (62) in turn provides rotational drive to the engine shaft (30; 32). The second starter (74; 74B) is configured to selectively provide rotational drive to the accessory gearbox (62) and the accessory gearbox (62) in turn provides rotational drive to the engine shaft (30; 32).

## Description

### BACKGROUND OF THE INVENTION

### 1. Technical Field

The present disclosure relates to gas turbine engines in general, and to starting systems for gas turbine engines in particular.

### 2. Background Information

The compressor of a gas turbine engine must achieve a critical speed to provide sufficient compression to self-sustain the engine cycle. A typical start sequence utilizes a single starter mounted to an accessory gearbox which transmits power from the starter to the engine shaft to accelerate the compressor. Accessory gearboxes (AGBs) typically have multiple mounting locations, referred to as "pads", for accessories such as pumps, generators, and starters. To successfully support the engine start process, the starter must be able to provide enough power/torque to the AGB to overcome resistive forces at all speeds up to the critical speed for a self-sustaining engine cycle. The resistive forces are dependent on many factors including the engine design (e.g., size), environmental conditions (e.g., temperature), and the like. The time required to achieve the critical compressor speed is dependent on the amount of power and torque that the starter can deliver beyond that required to overcome the resistive forces. It would be beneficial to provide a starting system for a gas turbine engine that is an improvement over existing systems.

### SUMMARY

According to an aspect of the present disclosure, a gas turbine engine is provided that includes a compressor section, a combustor section, a turbine section, an engine shaft, an accessory gearbox, a first starter, and a second starter. The engine shaft is in communication with the compressor section and the turbine section. The accessory gearbox has a first accessory mounting pad and a second accessory mounting pad, and is in communication with the engine shaft. The first starter is mounted on the first accessory mounting pad, and the second starter is mounted on the second accessory mounting pad. The first starter is configured to selectively provide rotational drive to the accessory gearbox and the accessory gearbox in turn provides rotational drive to the engine shaft. The second starter is configured to selectively provide rotational drive to the accessory gearbox and the accessory gearbox in turn provides rotational drive to the engine shaft.

In any of the aspects or examples described above and herein, the first and second accessory mounting pads may be independent of one another.

In any of the aspects or examples described above and herein, the accessory gearbox may be in communication with the engine shaft through a towershaft.

In any of the aspects or examples described above and herein, the compressor section may include a low pressure compressor and a high pressure compressor, and the turbine section may include a low pressure turbine and a high pressure turbine. The engine shaft in communication with the compressor section and the turbine section may include a low speed shaft that extends between the low pressure compressor and the low pressure turbine, and a high speed shaft that extends between the high pressure compressor and the high pressure turbine. The towershaft may be engaged with the accessory gearbox and the low speed shaft, or the towershaft may be engaged with the accessory gearbox and the high speed shaft.

In any of the aspects or examples described above and herein, the first starter may be configured as a first starter type and the second starter may be configured as a second starter type, wherein the first starter type is different than the second starter type.

In any of the aspects or examples described above and herein, the first starter type may be an air turbine starter, and the second starter type may be an electric starter generator.

In any of the aspects or examples described above and herein, the first and second starters may each be configured as a first starter type.

In any of the aspects or examples described above and herein, the first and second starters may each be configured as an electric starter generator.

In any of the aspects or examples described above and herein, the first starter may have a first performance configuration and the second starter may have a second performance configuration, and the first performance configuration may be different than the second performance configuration.

According to an aspect of the present disclosure, a gas turbine engine is provided that includes a compressor section, a combustor section, a turbine section, an engine shaft, an accessory gearbox, a first starter, a second starter, and a controller. The engine shaft is in communication with the compressor section and the turbine section. The accessory gearbox has a first accessory mounting pad and a second accessory mounting pad, and is in communication with the engine shaft. The first starter is mounted on the first accessory mounting pad and the second starter is mounted on the second accessory mounting pad. The controller is in communication with the first starter, the second starter, and a non-transitory memory storing instructions, which instructions when executed cause the system controller to control the first starter and the second starter to provide rotational drive to the accessory gearbox and the accessory gearbox in turn provides rotational drive to the engine shaft. The first starter and the second starter are controlled to provide rotational drive to the accessory gearbox until the compressor section reaches a critical rotational speed for a self-sustaining engine cycle.

In any of the aspects or examples described above and herein, the instructions when executed may cause the system controller to control the first starter and the second starter to operate in a parallel mode.

In any of the aspects or examples described above and herein, the instructions when executed may cause the system controller to control the first starter and the second starter to operate in a series mode.

In any of the aspects or examples described above and herein, the first starter and the second starter may each have a commercial-off-the-shelf configuration.

In any of the aspects or examples described above and herein, the accessory gearbox may include a third accessory mounting pad.

According to an aspect of the present disclosure, a method of starting a gas turbine engine is provided. The gas turbine engine includes a compressor section, a combustor section, a turbine section, an engine shaft in communication with the compressor section and the turbine section, and an accessory gearbox having a first accessory mounting pad and a second accessory mounting pad, wherein the accessory gearbox is in communication with the engine shaft. The method includes: controlling a first starter and a second starter to provide rotational drive to the accessory gearbox and the accessory gearbox in turn provides rotational drive to the engine shaft until the compressor section reaches a critical rotational speed for a self-sustaining engine cycle; and controlling the first starter and the second starter to no longer provide rotational drive to the accessory gearbox once the compressor section is at or above the critical rotational speed.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of a gas turbine engine that may utilize embodiments of the present disclosure.
FIG. 2 is a diagrammatic illustration of an accessory gearbox, a first towershaft, a second towershaft, and the engine shaft gears.
FIG. 3 is a diagrammatic illustration of an accessory gearbox showing a towershaft engaged with the accessory gearbox and an engine shaft of the gas turbine engine, and showing accessories mounted on the accessory gearbox.

### DETAILED DESCRIPTION

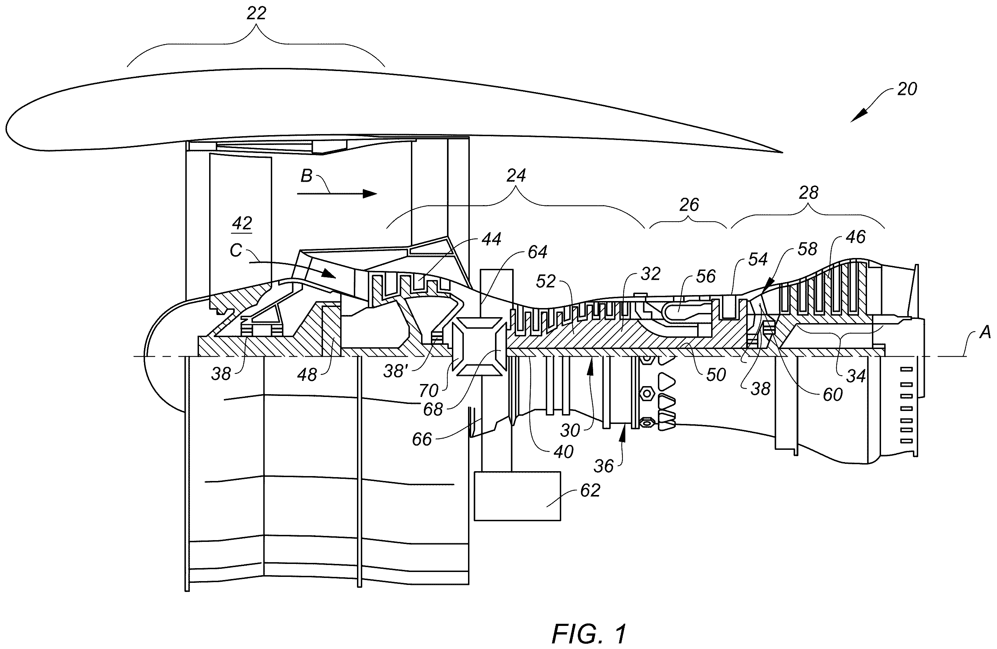

FIG. 1 diagrammatically illustrates an example of a gas turbine engine 20 in the form of a two-spool turbofan that includes a fan section 22, a compressor section 24, a combustor section 26, a turbine section 28, and an axial centerline / rotational axis "A". The fan section 22 drives air along a bypass flow path B in a bypass duct defined within a nacelle, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of gas turbine engines; e.g., three-spool engines, and the like.

The terms "forward", "leading", "aft, and "trailing" are used herein to indicate the relative position of a component or surface. As core gas air passes through the gas turbine engine, a "leading edge" of a stator vane or rotor blade encounters core gas air before the "trailing edge" of the same. In an engine like that shown in FIG. 1, the compressor section 24 is "forward" of the turbine section 28 and the turbine section 28 is "aft" of the compressor section 24. The terms "upstream" and "downstream" used herein refer to the direction of a gas flow passing through an annular gas path of the gas turbine engine. It should also be noted that the terms "radial" and "circumferential" are used herein with respect to the rotational axis of the gas turbine engine.

The engine 20 includes a low speed shaft 30 and a high speed shaft 32 mounted for rotation about the engine centerline "A" relative to an engine static structure 36 via several bearing systems 38. The low speed shaft 30 generally includes an inner shaft 40 that interconnects a fan 42, a low pressure compressor (LPC) 44 and a low pressure turbine (LPT) 46. The inner shaft 40 is connected to the fan 42 through a geared architecture 48 that permits the fan 42 to be driven at a lower speed than the low speed shaft 30. The present disclosure may be used with gas turbine engines that do not include a geared architecture. The high speed shaft 32 includes an outer shaft 50 that interconnects a high pressure compressor (HPC) 52 and a high pressure turbine (HPT) 54. A combustor 56 is arranged in exemplary gas turbine engine 20 between the HPC 52 and the HPT turbine 54. A mid-turbine frame 58 of the engine static structure 36 is arranged generally between the HPT 54 and the LPT 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the LPC 44 then the HPC 52, mixed and burned with fuel in the combustor 56, then expanded over the HPT 54 and the LPT 46. The mid-turbine frame 58 includes airfoils 60 which are in the core airflow path C. The turbines 46, 54 rotationally drive the respective low speed shaft 30 and high speed shaft 32 in response to the expansion. It will be appreciated that the relative positions of the fan section 22, compressor section 24, combustor section 26, turbine section 28, and geared architecture 48 may be varied. For example, the geared architecture 48 may be located aft of combustor section 26 or even aft of turbine section 28, and fan section 22 may be positioned forward or aft of the location of the geared architecture 48. As stated herein, however, the present disclosure does not require a geared architecture 48 be included The gas turbine engine 20 shown in FIG. 1 is provided as an example, and the present disclosure is not intended to be limited thereto.

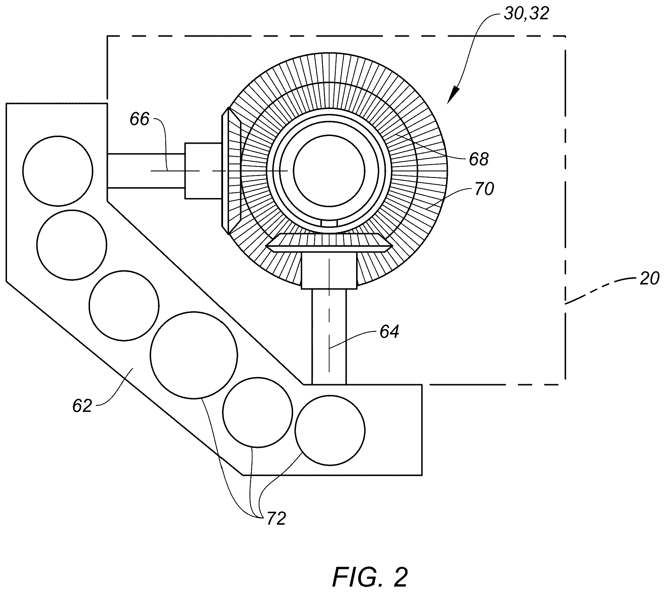

The gas turbine engine shown in FIG. 1 includes an accessory gearbox (AGB) 62. The AGB 62 may be driven off the high speed shaft 32, or off the low speed shaft 30, or both; e.g., some aspects of the AGB 62 may be driven off the high speed shaft 32, and other aspects of the AGB 62 may be driven off the low speed shaft 30. In FIG. 1, the engine 20 is diagrammatically shown including a first towershaft 64 that in drive engagement with the high speed shaft 32, and a second towershaft 66 in drive engagement with the low speed shaft 30. The low speed shaft 30 includes a first gear 70 and the high speed shaft 32 includes a second gear 68. The second gear 68 is engaged to the first towershaft 64 and the first gear 70 is engaged to the second towershaft 66. The first and second gears 68, 70 may be configured as bevel gears and may engage mating bevel gears on the corresponding first or second towershaft 64, 66. To facilitate the description, FIG. 2 provides a diagrammatic illustration of the AGB 62, the first towershaft 64, the second towershaft 66, and the gears 68, 70 engaged with the respective towershaft 64, 66.

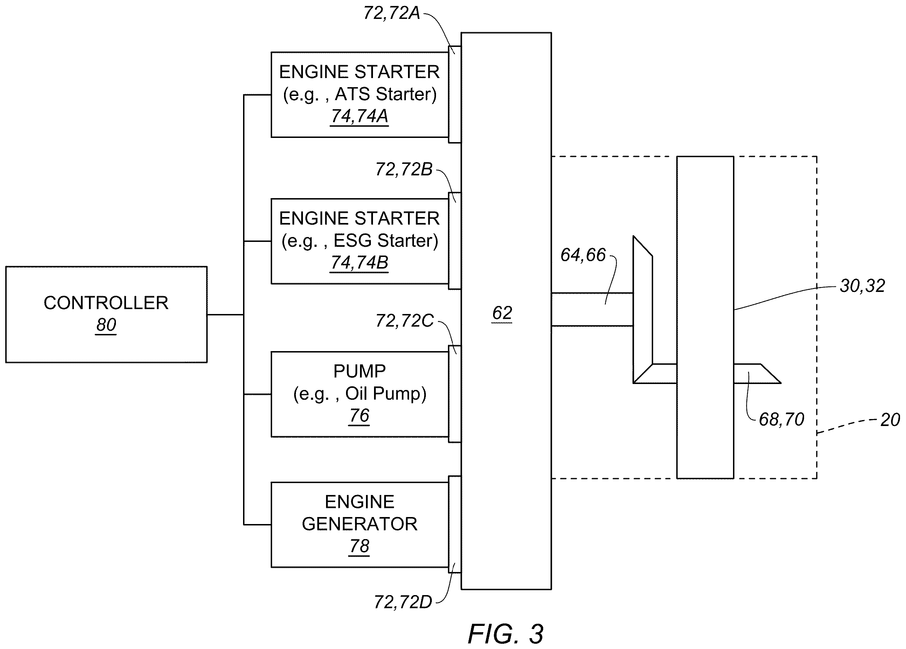

The AGB 62 is configured to transfer rotational drive between the gas turbine engine 20 (e.g., a shaft 30, 32 of the engine 20) and one or more "accessories", such as a starter 74, or a system pump 76 (e.g., lubrication pump, hydraulic fluid pump, or the like), or an electric generator 78, or the like, or any combination thereof (see FIG. 3). One or more towershafts (e.g., the first and second towershafts 64, 66 described herein) may be used to transfer rotational drive between the gas turbine engine 20 and the AGB 62. The AGB 62 includes a plurality of accessory mounting locations; each mounting location typically referred to as a "pad 72" or "accessory mounting pad 72". Each pad 72 may be configured to mount the accessory and to accomplish rotational drive transfer between the mounted accessory and the gas turbine engine 20. In the case of an accessory that must be driven to operate (e.g., a pump 76, or an electric generator 78, or the like), the AGB 62 is configured to transfer input rotational drive to the pad 72 where the accessory to be driven is mounted. In the case of an accessory that is configured to provide rotational drive into the AGB 62 (e.g., a starter 74), the AGB 62 is configured to transfer rotational drive from the accessory into the AGB 62, and the AGB 62 in turn will transfer rotational drive to the gas turbine engine 20; e.g., via a towershaft 64, 66. Each pad 72 may be associated with a predetermined gear ratio and torque; e.g., the input to the AGB 62 (e.g., via a towershaft) may be at a given input rotational velocity and input torque, and the AGB 62 modifies that input velocity and torque to produce an output velocity and torque (different than the input) at the pad 72. The AGB may be configured such that the output velocity and torque provided at a first pad 72 may be different than the output velocity and torque provided at a second pad 72. In this manner, the pads 72 may be referred to as being independent of one another, despite the fact that all of the pads are in communication with the input to the AGB.

A non-limiting example of a starter 74 type that may be used to start a gas turbine engine 20 is an "air turbine starter" (or "ATS"). An ATS utilizes a turbine to convert working fluid energy to the desired rotational drive. The working fluid for an ATS may be supplied by an aircraft component (e.g., an auxiliary power unit / "APU" - not shown), or by a system independent of the aircraft (e.g., a starting cart, or the like). A second example of a starter 74 type that may be used to start a gas turbine engine 20 is an electric starter-generator (i.e., an "ESG"). The ESG converts electrical energy into the desired rotational drive that drives the gas turbine engine 20. The electrical power used by the ESG may be supplied by systems onboard an aircraft (e.g., batteries or other electrical power storage devices, or an electrical power generator (e.g., an APU driving a generator), or the like), or systems external to the aircraft (e.g., a starting cart, a domestic power source, or the like).

In the process of starting a gas turbine engine 20, the compressor section 24 of the gas turbine engine 20 must achieve a critical speed to provide a flow of compressed air that is sufficient to enable the engine 20 to self-sustain the engine cycle. The critical speed is generally the compressor speed that provides a flow of air to the combustor that is adequate to support a level of combustion that delivers enough energy to the turbine section that self-sustains the engine cycle; e.g., allow the engine to accelerate to an idle speed.

It is known to operate a single starter to input rotational drive into the AGB, and the AGB in turn transfers that rotational drive to a shaft of the gas turbine engine, causing the compressor section to rotate and produce a flow of compressed air for entry into the combustor. The starter will only be able to successfully support the engine start if it can provide sufficient power/torque to overcome resistive forces acting on the AGB and the gas turbine engine at all speeds up to a critical speed associated with a self-sustaining engine cycle. The resistive forces may be a function of factors such as gas turbine engine design (e.g., size), environmental conditions (e.g., temperature), and the like. The time required to achieve the critical compressor speed is dependent on the amount of power and torque that the starter can deliver beyond that required to overcome the resistive forces. A single starter adequately sized to support the engine starting process under all conditions may not fit within space constraints.

According to aspects of the present disclosure, a gas turbine engine 20 is provided with an AGB 62 that includes a plurality of accessory pads 72 and a plurality of starters 74. The AGB 62 includes a separate pad 72 for each starter 74; e.g., a first pad 72 for a first starter 74, a second pad 72 for a second starter 74, a third pad 72 for a third starter 74, and so on. In some embodiments, the AGB 62 may include additional pads 72 for non-starter accessories; e.g., a pump 76, a generator 78, or the like. The AGB 62 example diagrammatically shown in FIG. 3 includes a first starter 74A mounted on a first pad 72A, a second starter 74B mounted on a second pad 72B, a pump 76 mounted on a third pad 72C, and an electric generator 78 mounted on a fourth pad 72D. The present disclosure is not limited to this embodiment.

In some embodiments, the plurality of starters 74 may all be the same type of starter 74; e.g., all ESG type starters, or all ATS type starters. In some embodiments, the plurality of starters 74 may include different types of starters; e.g., the first starter 74A mounted on the first pad 72A may be an ESG type starter, and the second starter 74B mounted on the second pad 72B may be an ATS type starter, and so on.

In some embodiments, the plurality of starters 74 may be configured as "commercial-off-the-shelf" (or "COTS") starters. A COTS starter may be one that is produced to a set of standard specifications and is typically produced in quantity, maintained in stock, and may be useful for a plurality of different applications. This is in contrast to a component that is custom designed based on relatively unique specifications for a particular application. A COTS component will very likely be less expensive and more readily available than a custom design component.

The present disclosure does not require any individual starter 74 of the plurality of starters 74 to be capable of starting the engine 20 by itself under all circumstances. On the contrary, the present disclosure may be operated such that the individual starters 74 (each on a separate pad 72) may be operated in concert to start the engine 20. For example (referring to FIG. 3), the first starter 74A and the second starter 74B may be operated in parallel such that both the first and second starters 74A, 74B are powered simultaneously to each produce rotational drive to the AGB 62. As another example, the first starter 74A and the second starter 74B may be operated in series. When operated in series, the first starter 74A may be initially powered to produce rotational drive to the AGB 62, and then the second starter 74B may be powered to produce rotational drive to the AGB 62. In series operation, there may be a transition period during which the first starter 74A is controlled to decrease its rotational drive output, and the second starter 74B is controlled to increase its rotational drive output. Over a transition period of time, the rotational drive output of the first starter 74A will go to zero and the rotational drive output of the second starter 74B will be increased to the desired level. In some embodiments, the plurality of starters 74 may be operated in some combination of parallel operation and series operation; e.g., operated in parallel for some period of time and subsequently operated in series. As stated herein, the plurality of starters 74 may include different types of starters, and regardless of whether the plurality of starters are the same type or different types, each starter may have a different performance configuration; e.g., a first starter may be configured to provide a greater amount of torque than a second starter, and the like. In this manner, the starters 74 could be operated in concert (e.g., series and/or parallel) to leverage the aforesaid different performance configurations.

In those embodiments wherein the operation of the plurality of starters 74 is controlled (e.g., controlled to operate in series, or in parallel, or some combination thereof, or the like), a controller 80 may be used to control the operation of the plurality of starters 74. The controller 80 may be dedicated to controlling the starters 74, or the controller 80 may be an existing engine or aircraft controller that is available to perform the functions described herein. The controller 80 is in communication with system components such as the starters 74 and may be in communication with other engine controllers (e.g., a FADEC), or engine sensors, and the like, to control the operation of the system component (e.g., the starters 74) and/or to receive signals from and/or transmit signals to the system component to perform the functions described herein. The controller 80 may include one or more of any type of computing device, computational circuit, processor(s), CPU, computer, or the like capable of executing a series of instructions that are stored in memory. In those embodiments wherein the controller 80 includes more than one control device, the control devices may be in communication with one another and may be disposed in any architecture that is capable of achieving the functionality described herein. The instructions may include an operating system, and/or executable software modules such as program files, system data, buffers, drivers, utilities, and the like. The executable instructions may apply to any functionality described herein to enable the inspection system to accomplish the same algorithmically and/or coordination of system components. The controller 80 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 80 may include, or may be in communication with, an input device (not shown) that enables a user to enter data and/or instructions, and may include, or be in communication with, an output device configured, for example to display information, or to transfer data, etc. Communications between the controller and other system components may be via a hardwire connection or via a wireless connection. The control system may include other components (e.g., signal processing hardware such as amplifiers, filters, analog to digital converters, or the like) in addition to or as an alternative to the components described herein.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted is a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc. The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A gas turbine engine (20), comprising:
a compressor section (24);
a combustor section (26);
a turbine section (28);
an engine shaft (30; 32; 40; 50) in communication with the compressor section (24) and the turbine section (28);
an accessory gearbox (62) having a first accessory mounting pad (72; 72A) and a second accessory mounting pad (72; 72B), wherein the accessory gearbox (62) is in communication with the engine shaft (30; 32; 40; 50);
a first starter (74; 74A) mounted on the first accessory mounting pad (72; 72A); and
a second starter (74; 74B) mounted on the second accessory mounting pad (72; 72B);
wherein the first starter (74; 74A) is configured to selectively provide rotational drive to the accessory gearbox (62) and the accessory gearbox (62) in turn provides rotational drive to the engine shaft (30; 32; 40; 50); and
wherein the second starter (74; 74B) is configured to selectively provide rotational drive to the accessory gearbox (62) and the accessory gearbox (62) in turn provides rotational drive to the engine shaft (30; 32; 40; 50).

2. The gas turbine engine of claim 1, wherein the first accessory mounting pad (72; 72A) and the second accessory mounting pad (72; 72B) are independent of one another and wherein the accessory gearbox (62) is in communication with the engine shaft (30; 32; 40; 50)through a towershaft (64; 66).

3. A gas turbine engine (20), comprising:
a compressor section (24);
a combustor section (26);
a turbine section (28);
an engine shaft (30; 32; 40; 50) in communication with the compressor section (24) and the turbine section (28);
an accessory gearbox (62) having a first accessory mounting pad (72; 72A) and a second accessory mounting pad (72; 72B), wherein the accessory gearbox (62) is in communication with the engine shaft (30; 32; 40; 50);
a first starter (74; 74A) mounted on the first accessory mounting pad (72; 72A) and a second starter (74; 74B) mounted on the second accessory mounting pad (72; 72B); and
a controller (80) in communication with the first starter (74; 74A), the second starter (74; 74B), and a non-transitory memory storing instructions, which instructions when executed cause the system controller (80) to control the first starter (74; 74A) and the second starter (74; 74B) to provide rotational drive to the accessory gearbox (62) and the accessory gearbox (62) in turn provides rotational drive to the engine shaft (30; 32; 40; 50);
wherein the first starter (74; 74A) and the second starter (74; 74B) are controlled to provide rotational drive to the accessory gearbox (62) until the compressor section (24) reaches a critical rotational speed for a self-sustaining engine cycle.

4. The gas turbine engine of any preceding claim, wherein the first accessory mounting pad (72; 72A) and the second accessory mounting pad (72; 72B) are independent of one another.

5. The gas turbine engine of any preceding claim, wherein the compressor section (24) includes a low pressure compressor (44) and a high pressure compressor (52), and the turbine section (28) includes a low pressure turbine (46) and a high pressure turbine (54); and
wherein the engine shaft (30; 32; 40; 50) in communication with the compressor section (24) and the turbine section (28) includes a low speed shaft (30) that extends between the low pressure compressor (44) and the low pressure turbine (46), and a high speed shaft (32) that extends between the high pressure compressor (52) and the high pressure turbine (54); and
wherein a towershaft (64; 66) is engaged with the accessory gearbox (62) and the low speed shaft (30), or the towershaft (64; 66) is engaged with the accessory gearbox (62) and the high speed shaft (32).

6. The gas turbine of any preceding claim, wherein the first starter (74; 74A) is configured as a first starter type and the second starter (74; 74B) is configured as a second starter type, wherein the first starter type is different than the second starter type.

7. The gas turbine engine of claim 2 or 6), wherein the first starter type is an air turbine starter, and the second starter type is an electric starter generator.

8. The gas turbine engine of any of claims 1 to 6 wherein the first starter and the second starter are each configured as a first starter type.

9. The gas turbine engine of claim 8, wherein the first starter (74; 74A) and the second starter (74; 74B) are each configured as an electric starter generator.

10. The gas turbine engine of claim 9, wherein the first starter (74; 74A) has a first performance configuration and the second starter (74; 74B) has a second performance configuration, and the first performance configuration is different than the second performance configuration.

11. The gas turbine engine of claim 3 or any of claims 4 to 10 as dependent on claim 3, directly or indirectly, wherein the instructions when executed cause the system controller (80) to control the first starter (74; 74A) and the second starter (74; 74B) to operate in a parallel mode.

12. The gas turbine engine of claim 3 or any of claims 4 to 10 as dependent on claim 3, directly or indirectly, wherein the instructions when executed cause the system controller (80) to control the first starter (74; 74A) and the second starter (74; 74B) to operate in a series mode.

13. The gas turbine engine of claim 3 or any of claims 4 to 12 as dependent on claim 3, directly or indirectly, wherein the first starter (74; 74A) and the second starter (74; 74B) each have a commercial-off-the-shelf configuration.

14. The gas turbine engine of claim 3 or any of claims 4 to 9 as dependent on claim 3, directly or indirectly, wherein the accessory gearbox (62) further includes a third accessory mounting pad (72; 72C).

15. A method of starting a gas turbine engine (20) that has a compressor section (24), a combustor section (26), a turbine section (28), an engine shaft (30; 32; 40; 50) in communication with the compressor section (24) and the turbine section (28), an accessory gearbox (62) having a first accessory mounting pad (72; 72A) and a second accessory mounting pad (72; 72B), wherein the accessory gearbox (62) is in communication with the engine shaft (30; 32; 40; 50), the method comprising:
controlling a first starter (74; 74A) and a second starter (74; 74B) to provide rotational drive to the accessory gearbox (62) and the accessory gearbox (62) in turn provides rotational drive to the engine shaft (30; 32; 40; 50) until the compressor section (24) reaches a critical rotational speed for a self-sustaining engine cycle; and
controlling the first starter (74; 74A) and the second starter (74; 74B) to no longer provide rotational drive to the accessory gearbox (62) once the compressor section (24) is at or above the critical rotational speed.
